# EUROPEAN PATENT APPLICATION

(11) **EP 1 645 991 A2**
(43) Date of publication of application: **12.04.2006**
(21) Application number: 05256235.2
(22) Date of filing: 05.10.2005
(51) Int. Cl.: G06K 15/00

(54) **Apparatus and method for direct printing**

(30) Priority: 06.10.2004 KR 2004079558
(71) Applicant: Samsung Electronics Co., Ltd., Suwon-si, Gyeonggi-Do (KR)
(72) Inventor: Ryu, Seok, Suwon-si Gyeonggi-do (KR); Lee, Kwang-chul, Suwon-si Gyeonggi-do (KR); Rhim, Eun-hee, dong, Yeongtong-gu Suwon-si Gyeonggi-do (KR)
(74) Representative: Waddington, Richard

(57) **Abstract**

Provided are methods and apparatuses for direct printing. The method includes transferring a markup document including link information on image data and text data to be printed via an image supplying apparatus (200), transferring information on image data stored by the image supplying apparatus (200) according to a request from a printing apparatus (300) to which the markup document is transferred, receiving the data identifier from the printing apparatus (300), which obtains the data identifier to identify the image data to be printed through the information on the received image data, and transferring image data identified by the received data identifier. When a direct printing job is performed between the image supplying apparatus (200) and the printing apparatus (300), image data can be transferred and printed together with text data.

## Description

Apparatuses and methods consistent with the present invention relate to direct printing. More particularly, the present invention relates to an apparatus and a method for direct printing that is capable of transferring image and text data and printing them at the same time

Recently, digital photographing apparatuses (hereinafter, referred to as "photographing apparatuses") such as digital cameras, digital camcorders, and cell phones with built-in digital cameras have come into widespread use. The photographing apparatus captures an image, converts the image into digital image data (hereinafter, referred to as "image data"), and stores the image data. A user may print the stored image data through a printing apparatus such as a printer, and a technology to print image data captured by the photographing apparatus has been developed.

In the conventional art, in order to print image data it is first transferred from a photographing apparatus to a printing relay apparatus such as, for example, a personal computer. The printing relay apparatus, which receives image data, performs serial jobs to process the image data; that is, the printing relay apparatus controls the layouts and resolutions of an image to be printed according to a user's preference. The printing apparatus receives image data processed by the printing relay apparatus and prints it according to conditions set by the printing relay apparatus.

However, a technology for performing direct printing between a photographing apparatus and a printing apparatus, without using a printing relay apparatus which sets various conditions for printing, has recently been developed. According to the direct printing technology, since the photographing apparatus and the printing apparatus are directly connected by a data transfer medium such as, for example, a universal serial bus (USB) cable, image data stored in the photographing apparatus may be directly printed through the printing apparatus.

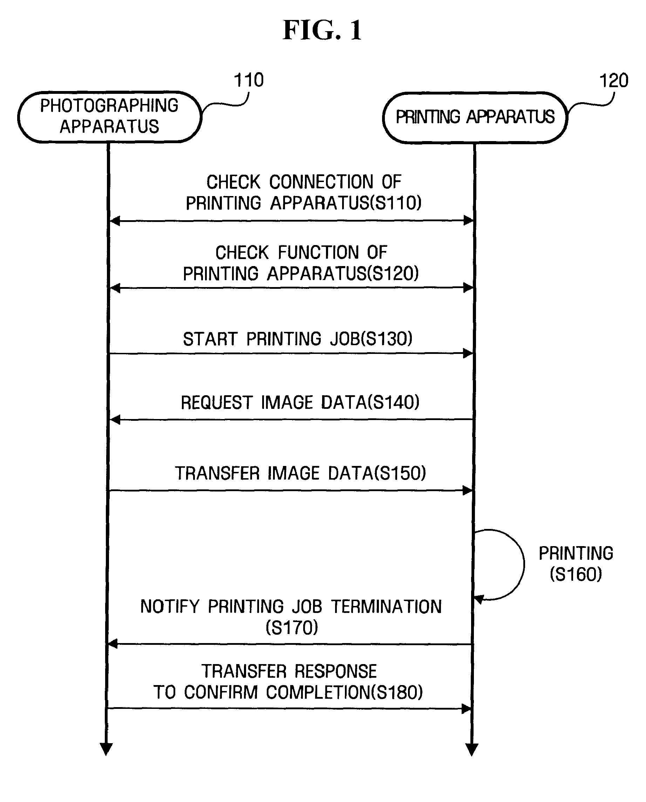

FIG. 1 is a flowchart which shows a direct printing process according to the conventional art.

When a user connects a photographing apparatus 110 and a printing apparatus 120 by using a transfer medium such as a USB cable, the photographing apparatus 110 checks whether the printing apparatus 120 has been connected thereto (S110). At this time, the printing apparatus 120 may also check whether the photographing apparatus 110 has been connected thereto.

When connection with the printing apparatus 120 is checked, the photographing apparatus 110 also checks functions of the printing apparatus 120 (S120). At this time, the photographing apparatus 110 may obtain information on a variety of printing functions of the printing apparatus 120, such as the type and size of printable paper, the format of the image data to be printed, the print layout, and other options.

After functions of the printing apparatus 110 are checked, the photographing apparatus 110 directs the printing apparatus 120 to initiate a print job (S130). At this time, the printing apparatus may concurrently transfer a data identifier to identify the image data to be printed. The data identifier is information to identify data to be transferred from the photographing apparatus 110 to the printing apparatus 120.

The printing apparatus 120 sends the received data identifier to the photographing apparatus 110 and then requests the image data that is to be printed (S140).

Accordingly, the photographing apparatus 110 transfers image data corresponding to the data identifier to the printing apparatus 120 (S150), and the printing apparatus 120 prints the transferred image data (S160).

When image data is transferred (S150), the photographing apparatus 110 may concurrently transfer information to set printing conditions such as layouts, resolutions, type of paper. A process to set printing conditions may be added.

When printing image data is finished, the printing apparatus 120 may notify the photographing apparatus 110 of completion of the printing (S170), and the photographing apparatus transfers a response to confirm the completion to the printing apparatus (S180), whereby the direct printing process is completed.

Korean Unexamined Patent Publication No. 10-2004-49868 entitled "Printing Apparatus, Control Method Thereof, and Storage Medium" discloses a direct printer which can be applied to a certain interface, among a variety of interfaces including USB, IEEE 1394, and Bluetooth.

The present invention provides a method of printing image data and text data concurrently when a direct printing job is performed.

The present invention provides a method of transferring image data and text data to be printed from an image supplying apparatus to a printing apparatus by using a markup document.

The present invention is not limited to the aspects described above, and any other aspects not described herein can be comprehended by those in the art from the following disclosure.

According to the present invention there is provided an apparatus and method as set forth in the appended claims. Preferred features of the invention will be apparent from the dependent claims, and the description which follows.

According to an aspect of the present invention, there is provided a method of transferring data for direct printing, which is performed by an image supplying apparatus, the method comprising transferring a markup document including link information on image data to be printed and text data to be printed, transferring information on image data stored in the image supplying apparatus according to a request from a printing apparatus to which the markup document is transferred, receiving the data identifier from the printing apparatus which obtains the data identifier to identify the image data to be printed through the information on the received image data, transferring image data identified by the received data identifier.

According to an aspect of the present invention, there is provided a direct printing method, which is performed by a printing apparatus, the method comprising allowing a printing apparatus to parse a markup document, which is received from an image supplying apparatus, involving link information on image data to be printed and text data, receiving information on image data stored in the image supplying apparatus from the image supplying apparatus, obtaining an identifier to identify the image data corresponding to link information on image data contained in the parsed markup document through information on the received image data, and allowing image data, which is identified by the data identifier, received from the image supplying apparatus to be printed with text data contained in the parsed markup document.

According to an aspect of the present invention, there is provided an image supplying apparatus, comprising a storage unit including one or more physical or logical storage areas to store one or more sets of image data in the storage areas, an encoder which is operable to use a specific markup language to compose link information on image data and text data to be printed, a controller which is operable to control transferring of image data stored in the storage unit, information on the stored image data, and the markup document generated as a result of composing by the encoder according to a request from the printing apparatus, and an external apparatus interface unit directly connected to the printing apparatus through a predetermined data transfer medium operable to thereby receive a request from the printing apparatus and send predetermined data to the printing apparatus according to direction by the controller.

According to an aspect of the present invention, there is provided a printing apparatus, comprising an external apparatus interface unit for receiving/sending data from/to an image supplying apparatus by being directly connected with the image supplying apparatus through a certain data transfer medium, a decoder for parsing a markup document, which is received from the image supplying apparatus, including link information on image data to be printed and text data, a controller for obtaining a data identifier to identify image data corresponding to the link information on image data through information on image data received from the image supplying apparatus and requesting image data identified through the obtained data identifier, and a printing unit for printing the image data received from the image supplying apparatus due to a request from the controller with text included in the parsed markup document.

For a better understanding of the invention, and to show how embodiments of the same may be carried into effect, reference will now be made, by way of example, to the accompanying diagrammatic drawings in which:
FIG. 1 is a flowchart illustrating direct printing according to the conventional art;
FIG. 2 is a block diagram of an image supplying apparatus according to an exemplary embodiment of the present invention;
FIG. 3 illustrates a markup document generated by the image supplying apparatus according to an exemplary embodiment of the present invention;
FIG. 4 is a block diagram of a printing apparatus according to an exemplary embodiment of the present invention;
FIG. 5 is a flowchart illustrating communications between the image supplying apparatus and the printing apparatus according to an exemplary embodiment of the present invention;
FIG. 6 is a flowchart illustrating an example of the transferring of information on image data shown in operation S245 of FIG. 5;
FIG. 7 is a flowchart illustrating another example of the transferring of information on image data shown in operation S245 of FIG. 5;
FIG. 8 is a flowchart illustrating an example of transferring information on image data in operation S245 of FIG. 5 embodied using PTP architecture; and
FIG. 9 is a flowchart illustrating an example of transferring a markup document or image data embodied using PTP architecture, according to an exemplary embodiment of the present invention.

The conventional direct printing technology is only directed to transferring and printing of image data between a photographing apparatus and a printing apparatus. However, considering that user preferences may change in the future, a direct printing technology is needed that is capable of printing not only image data but also text data.

Advantages and features of the present invention and methods of accomplishing the same may be understood more readily by reference to the following detailed description of the preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

An image supplying apparatus in the present invention refers to a portable apparatus capable of storing image data and performing direct printing by transferring the stored image data to a printing apparatus, to which the image supplying apparatus is directly connected, through a data transfer medium. Accordingly, not only the photographing apparatus described with respect to the conventional art, but also an apparatus capable of storing image data received from other apparatuses such as, for example, a personal digital assistant (PDA) or a cell phone, even though they cannot convert the photographed image into image data, can function as an image supplying apparatus.

Hereinafter, exemplary embodiments of the present invention will be described in detail with reference to the accompanying drawings.

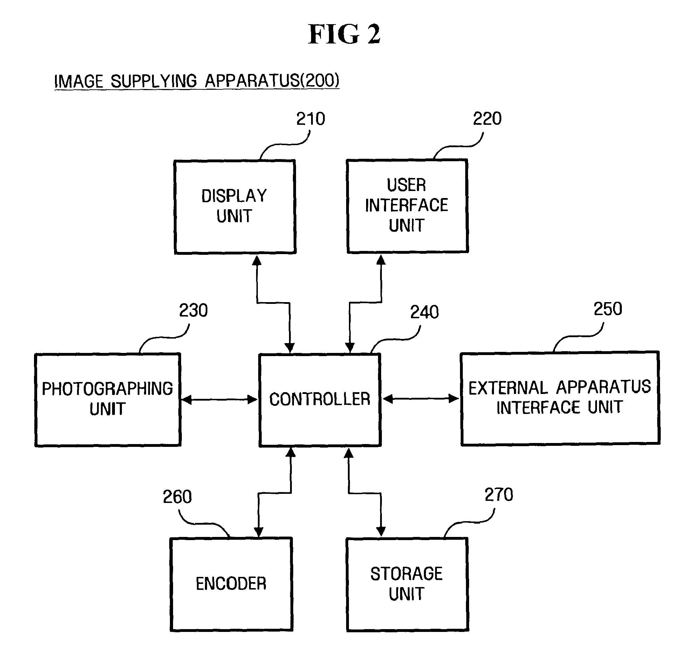

FIG. 2 is a block diagram of an image supplying apparatus according to an exemplary embodiment of the present invention.

As illustrated, an image supplying apparatus 200 comprises a display unit 210, a user interface unit 220, a controller 240, an external apparatus interface unit 250, an encoder 260, and a storage unit 270. When the image supplying apparatus 200 is a photographing apparatus that has an image capture function that can photograph an image and convert the image into image data, the image supplying apparatus 200 may further comprise a photographing unit 230.

The display unit 210 displays image data photographed by the photographing unit 230, image data and text data stored in the storage unit 270, and text data input into the user interface unit 220 by a user. When the image supplying apparatus 200 connected to the printing apparatus 300 performs a direct printing operation, the display unit 210 displays the printing conditions and progress. Thus, a user may check the image data and text data to be printed, and the progress of direct printing through the display unit 210.

The user interface unit 220 provides a means for the user to control the image supplying apparatus 200. Specifically, the user interface unit 220 may consist of a keypad or a touch screen.

The user may control printing operations for a direct printing job, such as setting printing conditions, selecting image data to be printed, inputting text to be printed with image data, and selecting the stored text data, through a user interface unit 220. When the image supplying apparatus 200 includes the photographing unit 230, the user may also perform various photographing jobs by controlling the image supplying apparatus 200 through the user interface unit 220.

In some cases, the user interface unit 220 may consist of a single functional block incorporating the display unit 210.

The photographing unit 230 captures an image and converts it into image data. The image data is stored in the storage unit 270, and may be displayed through the display unit 210 at the user's request or transferred to the printing apparatus 300 through the external apparatus interface unit 250.

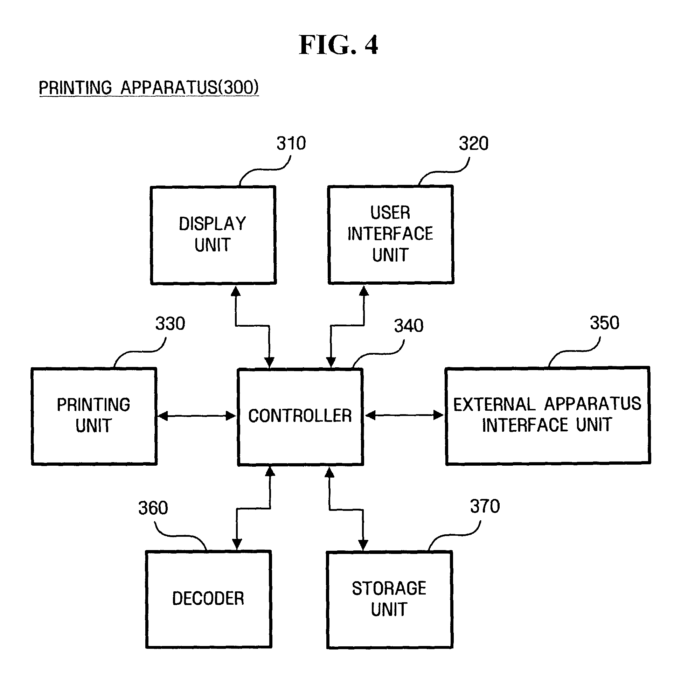

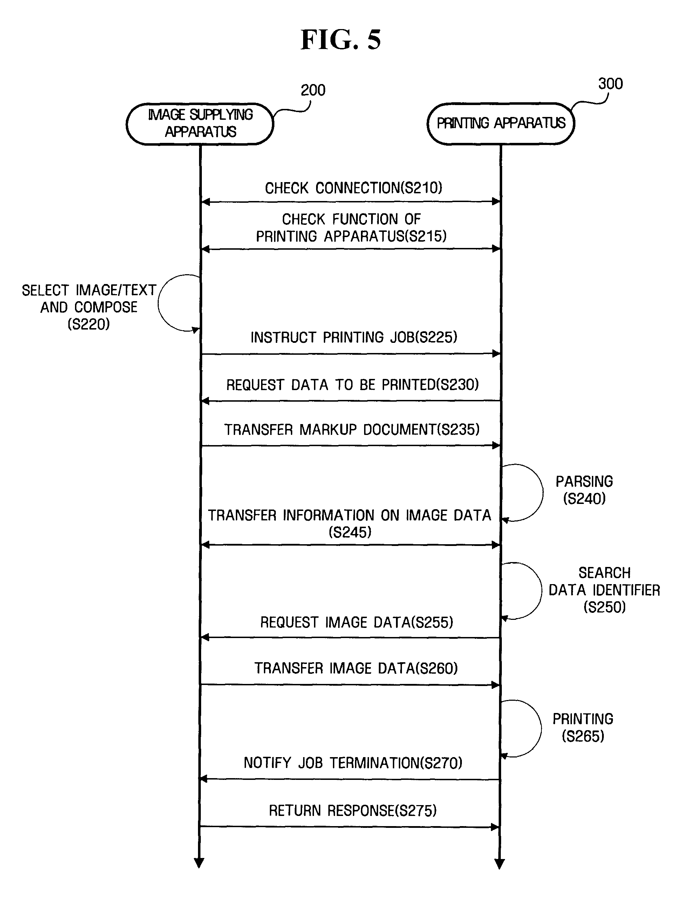

The controller 240 controls operations of various functional blocks constituting the image supplying apparatus 200 according to a user's request input through the user interface unit 220, and communications with the printing apparatus 300 (FIG. 4) for conducting direct printing jobs. A function of the controller 240 for communicating with the printing apparatus 300 for conducting direct printing jobs is detailed in FIGS. 5 to 7.

The controller 240 may generate or delete one or more logical storage areas in or from the storage unit 270. The controller 240 allocates data identifiers for data stored in the storage unit 270, such as image data and a markup document, and allocates a storage area identifier for a storage area constituting the storage unit 270. When image data to be printed is selected, the controller 240 copies and stores the selected image data in a temporary storage area of the storage unit 270. When image data stored in the temporary storage area is printed by the printing apparatus 300, the controller 240 may delete the image data stored in the temporary storage area.

The external apparatus interface unit 250 transfers data to the printing apparatus 300 and receives data transferred from the printing apparatus 300 according to direction from the controller 240. The external apparatus interface unit 250 may be connected to the printing apparatus using a wire transfer medium such as a USB or IEEE 1394 cable, or using a wireless transfer medium such as IrDA (Infrared Data Association).

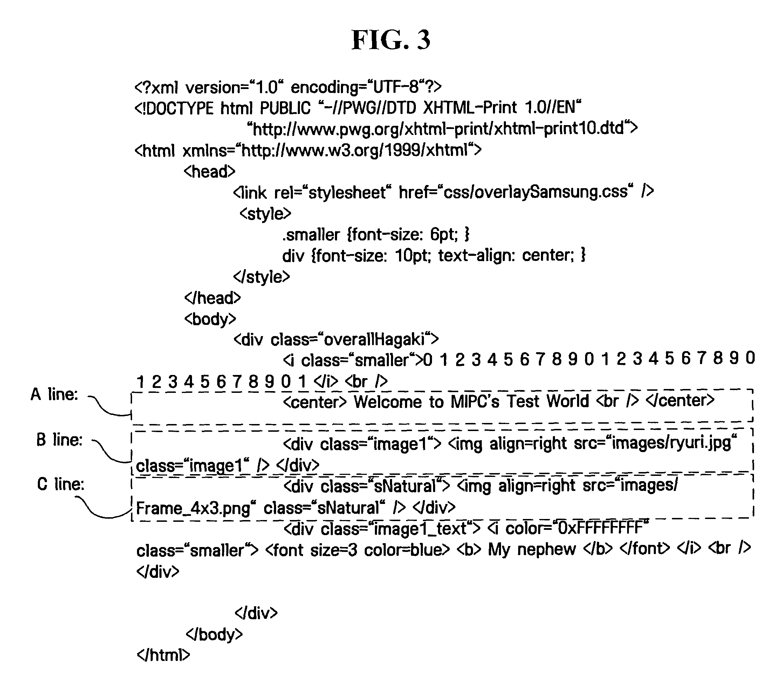

The encoder 260 composes text data and link information of image data determined by a user via the user interface unit 220 using a predetermined markup language. Text data may be data directly input through the user interface unit 220 or it may be stored in the storage unit 270. This link information is used in searching for image data stored in the storage unit 270. For example, link information may identify a position where image data is stored, such as folders where the image data is stored in the storage unit 270 and a file name of the image data. The encoder 260 may compose information on layouts of image data and text data to be printed together with the text data and link information of the image data. An example of a markup document composed by the encoder 260 is illustrated in FIG. 3.

FIG. 3 illustrates a document in which a printing format of multimedia data including image data and text data is written in XHTML according to an exemplary embodiment of the present invention. As shown in FIG. 3, the "A" line indicates text data to be printed, and "B" and "C" lines indicate that image data to be printed together with text data can be obtained by link information such as images/ryuri.jpg and images/Frame_4x3.png, respectively.

The storage unit 270 stores image data, text data, and the markup document composed by the encoder 260 and so on. A data identifier, which is used to identify data to be transferred by a data transfer protocol between the image supplying apparatus 200 and the printing apparatus 300, may be allocated to each set of data stored in the storage unit 270. For example, the exchange of image data between the image supplying apparatus 200 and the printing apparatus 300 may be performed by PTP (Picture Transfer Protocol for Digital Still Photography Devices, PIMA 15740:2000, July 5, 2000), and the data identifier may be the Object Handle (Objhandle) used in PTP.

The storage unit 270 may consist of one or more storage areas physically or logically differentiated and a storage identifier, for example, StorageID of PTP, which can be allocated to each storage area for identification.

If a user selects image data to be printed, the selected image data may be copied and the copied image data is stored in a temporary storage area that is physically or logically differentiated from storage areas.

When image data that a user selects has been printed by the printing apparatus 300 according to an exemplary embodiment of the present invention, the image data stored in the temporary storage area may be deleted.

When the temporary storage area is logically differentiated from other storage areas, it may be generated or deleted by the controller 240.

FIG. 4 is a block diagram of a printing apparatus according to an exemplary embodiment of the present invention.

As illustrated, the printing apparatus 300 comprises a display unit 310, a user interface unit 320, a printing unit 330, a controller 340, an external apparatus interface unit 350, a decoder 360, and a storage unit 370.

The display unit 310 displays various states of the printing progress of the printing apparatus 300. When the printing apparatus 300 is connected to the image supplying apparatus 200 to perform a direct printing job, the display unit 310 may display that the direct printing job is being performed.

The user interface unit 320 provides a means for a user to control the printing apparatus 300. Specifically, the user interface unit 320 may include a keypad or a touch screen. Thus, the user may set a variety of printing conditions, for example, paper size and type, image type, or the like, through the user interface unit 320.

When the printing apparatus 300 is connected to the image supplying apparatus 200 and performs a direct printing job, the printing conditions may be set by the image supplying apparatus 200.

The printing unit 330 prints image data and text data parsed by the decoder 360 on printing paper. The image data is transferred from the image supplying apparatus 200 at the request of the controller 340.

The controller 340 controls operations of each functional block of the printing apparatus 300 and communications with the image supplying apparatus 200 to perform a direct printing job. A function of the controller 340 that is performed in communication with the image supplying apparatus 200 to perform a direct printing job is displayed in FIGS. 5 to 7.

The external apparatus interface unit 350 sends data to the image supplying apparatus 200 or receives data transferred from the image supplying apparatus 200, as directed by the controller 340. The external apparatus interface unit 350 may be connected to the image supplying apparatus 200 by a wire transfer medium such as a USB or IEEE 1394 cable, or by a wireless transfer medium such as IrDA (Infrared Data Association) or RF(Radio Frequency).

The decoder 360 parses the markup document transferred from the image supplying apparatus 200. The markup document may include link information on image data and text data to be printed, and layout information about them. An example of the markup document was previously described with reference to FIG. 3.

The storage unit 370 stores a data identifier to identify image data stored in the storage unit 270 of the image supplying apparatus 200, and a variety of data or printing information, such as link information, received from the image supplying apparatus 200. This data may be deleted by the controller 340 when the external apparatus interface 350 and the image supplying apparatus 200 are disconnected.

The storage unit 370 may store information on a variety of printing functions of the printing apparatus 300 such as, for example, type and size of printable paper, printing conditions, format of image data, printable layouts adaptive to paper size, and other options.

FIG. 5 is a flowchart illustrating communication between an image supplying apparatus and a printing apparatus according to an exemplary embodiment of the present invention.

Although a specified description is not given with respect to exemplary embodiments of the present invention, it is assumed hereinafter that a variety of commands, requests, and data transferred between the image supplying apparatus 200 and the printing apparatus 300 are transferred through each of the external apparatus interface units 250 and 350.

When a user connects the image supplying apparatus 200 and the printing apparatus 300 by means of a data transfer medium such as a USB cable, the controller 240 of the image supplying apparatus 200 checks the connection to the printing apparatus (S210). At this time, the controller 340 of the printing apparatus 300 may also check whether the image supplying apparatus 200 is connected thereto.

If mutual connection is confirmed, the controller 240 of the image supplying apparatus 200 checks functions of the printing apparatus 300 (S215). For this purpose, the controller 340 of the printing apparatus 300 transfers information on the printing function thereof stored in the storage unit 370 to the image supplying apparatus 200 via the external apparatus unit 350. Accordingly, the image supplying apparatus 200 may obtain information on various printing functions of the printing apparatus 300 such as, for example, type and size of printable paper, printing conditions, format of image data, printable layouts adapted to paper size, and other options.

The checking of the connection (S210) and the checking of the functions of the printing apparatus (S215) may follow the conventional art.

When a user selects image data and text data to be printed through the user interface unit 220, and inputs a printing command after determining a layout for them, the encoder 260 composes link information about the selected image data, text data and layout using a predetermined markup language (S220).

After the markup document is generated, the controller 240 allocates a data identifier to the generated markup document and stores the markup document with the data identifier in the storage unit 270, and transfers the data identifier of the markup document together with a print job command to the printing apparatus 300 (S225).

To obtain data to be printed, the controller 340 of the printing apparatus 300 requests the image supplying apparatus 200 to supply the data identified by the data identifier received with the print job command (S230).

The image supplying apparatus 200 having received a request to transfer data from the printing apparatus 300 searches for the data identified by the data identifier (i.e., the markup document generated in operation S220) and transfers it to the printing apparatus 300 (S235).

When the user desires to print according to a markup document generated in advance, operation S220 may select the markup document stored in the storage unit 270 in advance. In this case, the markup document transferred in operation S235 is the markup document selected by a user in operation S220.

When the markup document is received from the image supplying apparatus 200, the decoder 360 of the printing apparatus 300 parses the received markup document (S240). As a result, the controller 340 of the printing apparatus 300 may obtain text data to be printed, link information about image data, and layouts about both.

To obtain a data identifier of image data to be printed, the controller 340 may obtain information about image data stored in the image supplying apparatus 200 from the image supplying apparatus (S245). Information about image data may comprise link information about image data, the data format, the data size, and the degree of compression. Once normal connection has been established (preferably, but not necessarily, after operation S215), operation S245 may be performed earlier in the sequence, as illustrated in FIG. 5.

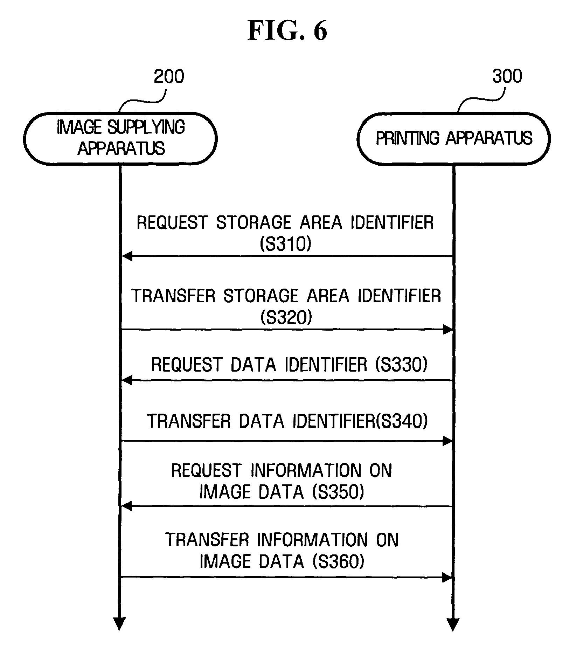

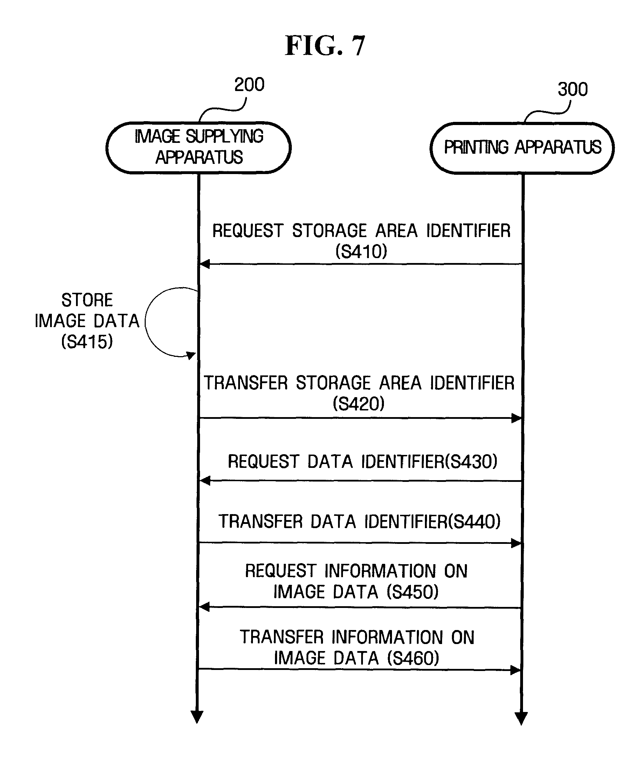

Transfer of information about image data in operation S245 will be described in detail with respect to FIGS. 6 and 7.

The controller 340 of the printing apparatus 300, which has received information about image data from the image supplying apparatus 200, searches for a data identifier of image data which has the same link information as the link information about image data included in the markup document.

The controller 340 of the printing apparatus 300 stores information about image data received from the image supplying apparatus 200 in the storage unit 370, and may later delete the stored information when the external apparatus interface unit 350 and the image supplying apparatus 200 are disconnected.

The controller 340 of the printing apparatus 300, which has obtained a data identifier of image data to be printed, may request the image data identified by the data identifier by transferring the data identifier to the image supplying apparatus 200 (S255). At this time, the controller 240 of the image supplying apparatus 200 searches for the image data identified by the received data identifier to thereby transfer it to the printing apparatus 300 (S260).

When the markup document received from the image supplying apparatus 200 comprises link information about a plurality of image data, the printing apparatus 300 may obtain the image data required for printing by repeating operations S250 to S260. When the markup document received from the image supplying apparatus 200 comprises link information about another markup document, the printing apparatus 300 may obtain the image data and text data required for printing by repeating operations S230 to S260, excluding S245, after having obtained a data identifier of the concerned markup document in operation S250.

When the image data is received, the controller 340 of the printing apparatus 300 outputs the result of the parsing performed in operation S240 to the printing unit 330, and the printing unit 330 prints image data and text data according to the parsing result (S265).

When the print job requested by the image supplying apparatus 200 terminates, the controller 340 of the printing apparatus 300 notifies the image supplying apparatus 200 of the termination of printing (S270), and the image supplying apparatus 200 sends a response thereto (S275), and the direct printing job is completed.

FIG. 6 is a flowchart specifically illustrating the transferring of information about image data (S245 of FIG. 5).

First, the controller 340 of the printing apparatus 300 requests the image supplying apparatus 200 to supply a storage area identifier to identify storage areas of a storage medium constituting the storage unit 270 of the image supplying apparatus 200 (S310).

Accordingly, the controller 240 of the image supplying apparatus 200 transfers storage area identifiers allocated to each storage area to the printing apparatus 300 (S320).

The controller 340 of the printing apparatus 300 transfers the received storage area identifier to the image supplying apparatus 200 in order to request a data identifier of the image data stored in the concerned storage area identified by the storage area identifier (S330).

The controller 240 of the image supplying apparatus 200 transfers the data identifiers of the image data stored in the storage area identified by the received storage area identifier to the printing apparatus 300 (S340).

If several storage area identifiers are transferred in operation S320, operations S330 and S340 may be repeated for each storage area identifier.

The controller 340 of the printing apparatus 300, which receives the data identifier of image data, may request information on the image data identified by the data identifier by transferring the data identifier to the image supplying apparatus 200 (S350).

Accordingly, the controller 240 of the image supplying apparatus 200 collects information on image data indicated by the received data identifier and then transfers the information to the printing apparatus 300 (S360). The information on image data may comprise link information on image data, the data format, the data size, and the degree of compression.

If several data identifiers are transferred through operation S340, operations S350 and S360 may be repeated for each data identifier.

Through these operations the printing apparatus 300 obtains data identifiers and link information for each set of image data. Accordingly, the printing apparatus 300 may obtain a data identifier of image data which has the same link information as that of image data included in the markup document in operation S250 of FIG. 5.

The controller 340 of the printing apparatus 300 may store the data identifier of the image data and information associated with the image data in the storage unit 370. When the printing job S265 of FIG. 5 is completed, the controller 340 of the printing apparatus 300 may delete the data identifier of image data and information associated with the image data stored in the storage unit 370.

FIG. 7 is a flowchart illustrating another exemplary embodiment of transferring information about image data (S245 of FIG. 5).

First, the controller 340 of the printing apparatus 300 requests the image supplying apparatus 200 to supply a storage area identifier to identify storage areas of the storage unit 270 of the image supplying apparatus 200 (S410).

At this time, the controller 240 of the image supplying apparatus 200 stores image data to be printed in a temporary storage area of the storage unit 270 S415, and then transfers a storage area identifier of the temporary storage area to the printing apparatus 300 S420.

Storing image data to be printed in the temporary storage area (operation S415) may be performed in advance. For example, if image data to be printed is selected, the controller 240 of the image supplying apparatus 200 may store the selected image data in the temporary storage area after copying it. In this case, operation S415 of FIG. 7 may be performed immediately after operation S220.

The controller 340 of the printing apparatus 300 transfers the received storage area identifier to the image supplying apparatus 200 to thereby request a data identifier of image data stored in the temporary storage area (S430).

The controller 240 of the image supplying apparatus 200 transfers the data identifiers of the image data stored in the temporary storage area identified by the received storage area identifier to the printing apparatus 300 (S440).

The controller 340 of the printing apparatus 300, which has received the data identifier of image data, may request information on the image data identified by the data identifier by transferring the data identifier to the image supplying apparatus 200 (S450).

Accordingly, the controller 240 of the image supplying apparatus 200 transfers information on image data indicated by the received data identifier to the printing apparatus 300 (S460).

If several data identifiers are transferred in operation S440, operations S450 and S460 may be repeated for each data identifier.

An example of data transfer between the image supplying apparatus 200 and the printing apparatus 300 will be described as embodied using a PTP architecture. However, the present invention is not limited thereto, and the present invention may be embodied by other image data transfer protocols.

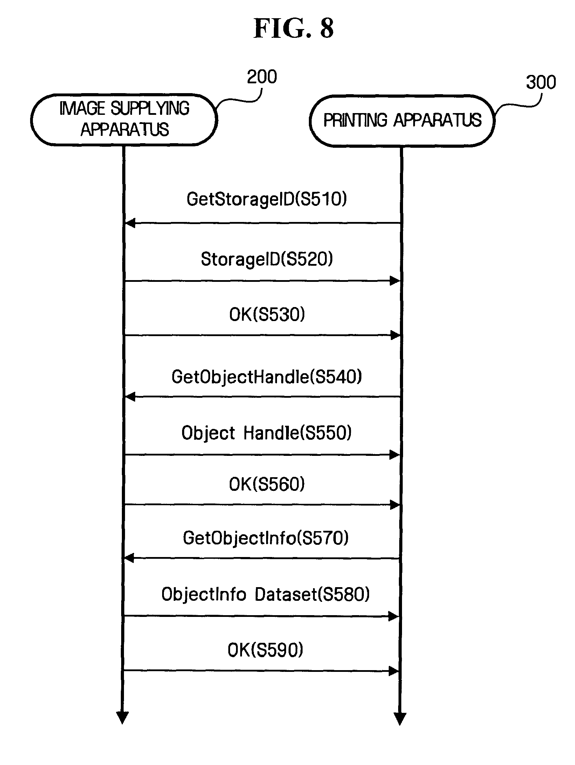

FIG. 8 is a flowchart illustrating an example of transferring information on image data (S245) using a PTP architecture.

The printing apparatus 300 requests the image supplying apparatus 200 to supply a storage area identifier (StorageID) through a GetStorageID command S510. At the request of the printing apparatus 300, the image supplying apparatus 200 transfers a storage area identifier (StorageID) to identify a storage area of the storage unit 270 (S520), and then notifies the printing apparatus 300 that it is ready to perform a subsequent job (S530).

Operations S510 to S530 embody operations S310 and S320 of FIG. 6 or operations S410 and S420 of FIG. 7.

Thereafter, the printing apparatus 300 requests a data identifier (Object Handle) of image data (Object Data) stored in the storage area of the image supplying apparatus 200 through a GetStorageID command S540. At this time, the printing apparatus 300 may concurrently transfer the storage area identifier (StorageID) received in operation S520 as a parameter of the Get Object Handle command.

The image supplying apparatus 200 identifies a storage area through the received storage area identifier (StorageID), and then transfers the data identifiers (Object Handle) of the image data (Object Data) stored in the identified storage area to the printing apparatus 300 (S550).

Thereafter, the image supplying apparatus 200 notifies the printing apparatus 300 that the image supplying apparatus 200 is ready to perform a subsequent job (S560).

If several storage area identifiers (StorageID) are transferred in operation S520, operations S540 to S560 may be repeated for each storage area identifier (StorageID).

Operations S540 to S560 embody operations S330 and S340 of FIG. 6 or operations S430 and S440 of FIG. 7.

The printing apparatus 300, which has received the data identifier (Object Handle), requests information on image data (ObjectInfo Dataset) through a GetObjectInfo command (S540). At this time, the data identifier (Object Handle) received in operation S550 may be concurrently transferred as a parameter of the GetObjectInfo command.

The image supplying apparatus 200 identifies image data through the received data identifier (Object Handle), and then transfers information on the identified image data (ObjectInfo Dataset) to the printing apparatus 300 (S580).

Thereafter, the controller 240 of the image supplying apparatus 200 notifies the printing apparatus 300 that the controller 240 is ready to perform a subsequent job (S590).

If a plurality of the data identifiers (Object Handle) are transferred in operation S550, operations S570 to S590 may be repeated for each data identifier (Object Handle).

Operations S570 to S590 embody operations S350 and S360 of FIG. 6 or operations S450 and S460 of FIG. 7.

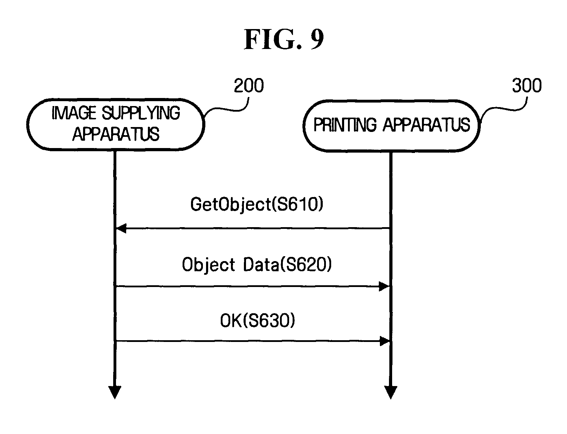

FIG. 9 is a flowchart illustrating the transferring a markup document or image data embodied by a PTP architecture according to an exemplary embodiment of the present invention.

First, transfer of a markup document will be described. The printing apparatus 300, which has received the data identifier (Object Handle) of data to be printed from image supplying apparatus 200, requests transfer of data to be printed through GetObject command S610. For example, the data identifier (Object Handle) may be received through operation S225 of FIG. 5.

At this time, the printing apparatus 300 may concurrently transfer the data identifier (Object Handle) of data to be printed as a parameter of the GetObject command.

The image supplying apparatus 200 identifies the markup document (Object Data) through the received data identifier (Object Handle) and then transfers the identified markup document (Object Data) to the printing apparatus 300 (S620).

Thereafter, the image supplying apparatus 200 notifies the printing apparatus 300 that the image supplying apparatus 200 is ready to perform a subsequent job (S630).

This is an example which embodies operations S230 and S235 described in reference to FIG. 5.

The transfer of image data may also be embodied by the same process described above with reference to FIG. 9.

The printing apparatus 300, which has obtained the data identifier (Object Handle) of image data to be printed from the image supplying apparatus 200, requests the transfer of image data to be printed through a GetObject command S610. For example, the data identifier (Object Handle) of the image data may be obtained through operations S245 and S250 of FIG. 5.

At this time, the printing apparatus 300 may concurrently transfer the data identifier (Object Handle) of data to be printed as a parameter of the GetObject command.

The image supplying apparatus 200 identifies image data (Object Data) through the received data identifier (Object Handle), and then transfers the identified image data (Object Data) to the printing apparatus 300 (S620).

Thereafter, the image supplying apparatus 200 notifies the printing apparatus 300 that the image supplying apparatus 200 is ready to perform a subsequent job (S630).

This is an example which embodies operations S255 and S260 of FIG. 5.

As described above, in the direct printing method and apparatus according to the present invention, when a direct print job is performed, image data can be printed together with text data.

As described above, in the direct printing method and apparatus according to the present invention, image data and text data to be printed may be transferred between the image supplying apparatus and the printing apparatus by using a markup document.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of transferring data for direct printing, which is performed by an image supplying apparatus (200), the method comprising:
transferring a markup document including link information of image data and text data to be printed;
transferring information on image data stored in the image supplying apparatus (200) at the request of a printing apparatus (300) that has received the markup document;
receiving a data identifier from the printing apparatus (300) that has obtained the data identifier which is capable of identifying image data to be printed, through the received information about the image data; and
transferring the image data identified through the received data identifier.

2. The method of claim 1, wherein transferring a markup document comprises:
selecting image data and text data to be printed as designated by a user;
generating a markup document including the link information on the designated image data and the text data; and
transferring the generated markup document to the printing apparatus (300).

3. The method of claim 1 or claim 2, wherein transferring information on the image data comprises:
transferring a storage area identifier to identify one or more physically or logically differentiated storage areas in a storage medium included in the image supplying apparatus (200), according to a first request by the printing apparatus (300);
transferring a data identifier of image data stored in the storage area identified by the storage area identifier according to a second request by the printing apparatus (300); and
transferring information on image data identified through the data identifier according to a third request by the printing apparatus (300).

4. The method of claim 3, wherein the information on image data comprises link information on image data identified through the transferred data identifier.

5. The method of claim 3 or claim 4, wherein transferring the storage area identifier comprises:
storing the image data to be printed in a temporary storage area physically or logically differentiated from a storage area in which other data is stored; and
transferring the storage area identifier of the temporary storage area according to the first request from the printing apparatus (300).

6. The method of claim 5, further comprising deleting the image data stored in the temporary storage area when the printing apparatus (300) has printed the image data and the text data.

7. The method of any preceding claim, wherein the data identifier is used to identify data to be transferred between the printing apparatus (300) and the image supplying apparatus (200) using an image data transfer protocol.

8. The method of claim 7, wherein the image data transfer protocol is PTP (Picture Transfer Protocol).

9. The method of any preceding claim, wherein the markup document comprises information about a layout which indicates a printing format of the image data and the text data.

10. A direct printing method which is performed by a printing apparatus (300), the method comprising:
parsing a markup document including link information of image data and text data to be printed, which is received from an image supplying apparatus (200);
receiving information on image data stored in the image supplying apparatus (200);
obtaining a data identifier to identify image data corresponding to the link information on image data included in the parsed markup document through the received information on image data; and
receiving image data identified by the data identifier from the image supplying apparatus (200), and then printing the image data together with the text data included in the parsed markup document.

11. The method of claim 10, wherein receiving the information on image data comprises:
requesting transfer of a storage area identifier to identify one or more storage areas physically or logically separated in a storage medium included in the image supplying apparatus (200) (first request);
receiving the storage area identifier from the image supplying apparatus (200) according to the first request, and requesting transfer of data identifier of image data stored in a storage area identified by the received storage area identifier (second request);
receiving the data identifier from the image supplying apparatus (200) according to the second request, and requesting transfer of information on image data identified by the data identifier (third request); and
receiving the information on image data from the image supplying apparatus (200) according to the third request.

12. The method of claim 11, wherein the information on image data comprises link information on image data identified by the received data identifier.

13. The method of claim 12, further comprising storing the received data identifier and link information.

14. The method of claim 13, further comprising deleting the stored data identifier and link information when the printing apparatus (300) is disconnected from the image supplying apparatus (200).

15. The method of any one of claims 10 to 14, wherein the data identifier is used to identify data to be transferred between the printing apparatus (300) and the image supplying apparatus (200) using an image data transfer protocol.

16. The method of claim 15, wherein the image data transfer protocol is PTP (Picture Transfer Protocol).

17. The method of any one of claims 10 to 16, wherein the markup document comprises information on a layout indicating a printing format of the image data and text data to be printed.

18. An image supplying apparatus (200) comprising:
a storage unit (270) including one or more physical or logical storage areas operable to store one or more sets of image data in the storage areas;
an encoder (260) which is operable to use a specific markup language to compose link information on image data and text data to be printed;
a controller (240) which is operable to control transferring of image data stored in the storage unit (270), information on the stored image data, and the markup document generated as a result of composing by the encoder (260) according to a request from the printing apparatus (300); and
an external apparatus interface unit (250) directly connected to the printing apparatus (300) through a predetermined data transfer medium, thereby operable to receive the request from the printing apparatus (300) and to send predetermined data to the printing apparatus (300) according to direction by the controller (240).

19. The apparatus of claim 18, wherein the external apparatus interface unit (250) is operable to send a storage area identifier to identify the storage area according to the request from the printing apparatus (300) when the request is a first request, to transfer a data identifier of image data stored in a storage area identified by the storage area identifier according to the request from the printing apparatus (300) when the request is a second request, and to transfer information on image data identified by the data identifier according to the request from the printing apparatus (300) when the request is a third request.

20. The apparatus of claim 19, wherein the information on image data comprises link information on image data identified by the received data identifier.

21. The apparatus of claim 19 or claim 20, wherein the controller (240) is operable to store the image data to be printed in a temporary storage area physically or logically differentiated from the storage area in which other data is stored, among storage areas included in the storage unit (270).

22. The apparatus of claim 21, wherein the storage area identifier transferred to the printing apparatus (300) is a storage area identifier of the temporary storage area.

23. The apparatus of claim 22, wherein the controller is (240) is operable to delete data stored in the temporary storage area when the printing apparatus (300) has printed the image data and the text data.

24. The apparatus of any one of claims 18 to 23, wherein the data identifier is operable to be used to identify image data to be transferred to the printing apparatus (300) using an image data transfer protocol.

25. The apparatus of claim 24, wherein the protocol to transfer image data to the printing apparatus (300) is PTP (Picture Transfer Protocol).

26. The apparatus of any one of claims 18 to 25, wherein the encoder (260) is operable to compose the information in a layout to indicate printing formats of the image data and the text data to be printed together with the link information on the image data and the text data.

27. A printing apparatus (300) comprising:
an external apparatus interface unit (250) directly connected to an image supplying apparatus (200) through a predetermined data transfer medium to thereby send and receive data to and from the image supplying apparatus (200);
a decoder (360) to parse a markup document including link information on image data and text data, which is received from the image supplying apparatus (200);
a controller (240) to obtain a data identifier to identify image data corresponding to the link information on image data through information on the image data received from the image supplying apparatus (200), and to request the image data identified by the obtained data identifier; and
a printing unit (330) to print the image data received from the image supplying apparatus (200) together with the text data included in the parsed markup document according to direction from the controller (240).

28. The apparatus of claim 27, wherein the controller (240) is operable to request the image supplying apparatus (200) to transfer a storage area identifier to identify one or more storage areas physically or logically differentiated in a storage medium included in the image supplying apparatus (200), to request the image supplying apparatus (200) to transfer a data identifier of image data stored in the storage area identified by the storage area identifier according to the request to transfer the storage area identifier, to request the image supplying apparatus (200) to transfer information on image data identified through the data identifier received from the image supplying apparatus (200) according to the request to transfer the data identifier, and to receive the information on image data from the image supplying apparatus (200) according to the request to transfer the information on image data.

29. The apparatus of claim 28, wherein the information on image data comprises link information on image data identified by the received data identifier.

30. The apparatus of claim 28 or claim 29, further comprising a storage unit (270) to store the received data identifier and link information.

31. The apparatus of claim 30, wherein the controller is (240) is operable to delete the data identifier and link information stored in the storage unit (270) when the printing apparatus (300) is disconnected from the image supplying apparatus (200).

32. The apparatus of any one of claims 27 to 31, wherein the data identifier is operable to be used to identify image data transferred from the image supplying apparatus (200) using an image data transfer protocol.

33. The apparatus of claim 32, wherein the image data transfer protocol is PTP (Picture Transfer Protocol).

34. The apparatus of any one of claims 27 to 33, wherein the markup document comprises information on a layout indicating printing formats of image data and text data to be printed.
